Europäisches Patentamt

European Patent Office

Office européen des brevets

(19)

(11) Veröffentlichungsnummer: **0 238 889 B1**

(12) **EUROPÄISCHE PATENTSCHRIFT**

(45) Veröffentlichungstag der Patentschrift: 08.01.92

(21) Anmeldenummer: 87102862.7

(22) Anmeldetag: 27.02.87

(51) Int. Cl.⁵: **G01M 15/00**, F02D 41/34, F02P 5/04

(54) Einrichtung zum Erfassen der zylinderbezogenen Kurbelwellenstellung.

(30) Priorität: 13.03.86 DE 3608321

(43) Veröffentlichungstag der Anmeldung:
30.09.87 Patentblatt 87/40

(45) Bekanntmachung des Hinweises auf die
Patenterteilung:
08.01.92 Patentblatt 92/02

(84) Benannte Vertragsstaaten:
FR GB IT SE

(56) Entgegenhaltungen:
DE-A- 2 951 622
FR-A- 2 171 626
FR-A- 2 392 438
GB-A- 2 157 422
US-A- 4 284 052

(73) Patentinhaber: PIERBURG GMBH
Alfred-Pierburg-Strasse 1
W-4040 Neuss 1(DE)

(72) Erfinder: Härtel, Günter
Am Vogelbusch 16
W-4040 Neuss 21(DE)

(74) Vertreter: Schumacher, Bernd, Dipl.-Ing.
Am Schwaberg 13
W-6450 Hanau 6(DE)

Rank Xerox (UK) Business Services

**Beschreibung**

Die Erfindung betrifft eine Einrichtung gemäß dem Oberbegriff von Anspruch 1.

In bekannter Weise kann aus der Position der Kurbelwelle beim Viertaktmotor keine ausreichende Information über den richtigen Zeitpunkt für die Zündung und bei sequentiellen Einspritzsystemen für die Einspritzung des einzelnen Zylinders abgeleitet werden. Das liegt daran, daß sich beim Viertaktmotor der vollständige Arbeitszyklus (Ansaugen-Verdichten-Verbrennen/Arbeitshub-Ausschieben) über zwei volle Kurbelwellenumdrehungen, also über 720 Grad Kurbelwellenwinkel, erstreckt. Beim Vollmotor erfolgen die einzelnen Arbeitszyklen in einem Abstand, der durch die Zahl der vorhandenen Zylinder bestimmt wird (bei sechs Zylindern beträgt der Abstand des Kurbelwellenwinkels 720 : 6 = 120 Grad, während er bei vier Zylindern 720 : 4 = 180 Grad ausmacht).

Moderne Motoren mit ruhender Hochspannungsverteilung erfordern eine zeitgerechte Auslösung des Einspritz- bzw. Zündzeitpunktes. Es ist deshalb erforderlich, außer der Stellung der Kurbelwelle auch die Stellung der Nockenwelle zur Identifizierung der Kurbelwellenposition zum Arbeitszyklus der Zylinder heranzuziehen. In diesem Zusammenhang ist es bekannt, an der Kurbelwelle wie auch an der Nockenwelle Signalgeber in Form von mit Nocken bzw. Zähnen ausgebildeten Geberscheiben anzuordnen, die bei Drehung an fest positionierten und beispielsweise induktiv arbeitenden Signalempfängern vorbeistreichen und dadurch Impulssignale auslösen. Dabei enthält die Geberscheibe der Kurbelwelle zur genauen Erfassung ihrer Position eine größere Anzahl von beispielsweise 60 Zähnen am Umfang, während zur Zuordnung zum Arbeitszyklus eine einzige Signalmarke auf der Geberscheibe der Nockenwelle genügt. Diese Einrichtung hat jedoch den Nachteil, daß der Motor beim Anlassen im ungünstigsten Fall zwei volle Umdrehungen machen muß, bis der Geber an der Nockenwelle ein Signal liefert und eine Identifizierung der Kurbelwellenstellung zum Arbeitszyklus liefert. Deshalb ist häufig nur eine verzögerte Berechnung und Ausgabe eines zeitgerechten Zündungs- und Einspritz-Ansteuerimpulses möglich, wodurch sich die Startzeiten verlängern.

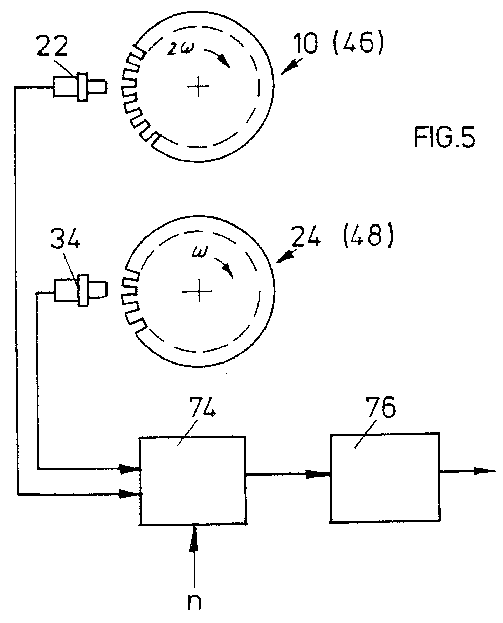

Die DE-OS 29 51 622 beschreibt eine Einrichtung gemäß dem Oberbegriff von Patentanspruch 1. Diese Einrichtung ist nur gemäß der Ausführungsform aus den Fig. 5 und 6 für eine gerade Zylinderanzahl geeignet. Die Nockenwellen-Geberscheibe ist mit zwei gleich langen, sich umfangsmäßig über 180° erstreckenden Signalmarken versehen, während die Kurbelwellen-Geberscheibe einerseits über den Umfang gleichmäßig verteilte Signalmarken und andererseits eine der Zylinderanzahl entsprechende Anzahl von umfangsmäßig verteilten, von den Signalmarken unabhängigen Kennungsmarken jeweils unterschiedlicher Länge aufweist. Die Signalmarken der Nockenwellen-Geberscheibe sowie die Signalmarken der Kurbelwellen-Geberscheibe und deren Kennungsmarken werden mittels drei Signalempfängern als Impulse erfaßt und dann ausgewertet, um möglichst schnell eine Identifizierung der Kurbelwellenstellung zum Arbeitszyklus zu ermöglichen. Nachteilig ist hierbei, daß drei Signalempfänger und relativ viele, unterschiedliche Kennungsmarken erforderlich sind, also eine relativ komplizierte und aufwendige Einrichtung vorliegt.

Der vorliegenden Erfindung liegt daher die Aufgabe zugrunde, eine Einrichtung der im Oberbegriff genannten Art mit einfachen Maßnahmen so auszubilden, daß jederzeit während des Betriebsablaufes eine unverzügliche Bestimmung der zylinderbezogenen Kurbelwellenstellung möglich ist.

Zur Lösung der gestellten Aufgabe zeichnet sich eine Einrichtung der im Oberbegriff genannten Art erfindungsgemäß durch die im Kennzeichen von Anspruch 1 aufgeführten Merkmale aus. Da die vorgegebenen Teilungen der Signalmarken bekannt sind, kann in jeder Drehposition, insbesondere auch beim Anlassen des Motors, ein entsprechender Vergleich der Impulse von den Signalmarken der Kurbelwellen- sowie Nockenwellenabschnitte durchgeführt werden, wobei erforderlichenfalls auch die Unterschiedlichkeit der Kennungsmarken des Kurbelwellen-Signalgebers berücksichtigt wird, um eine exakte Definition der zylinderbezogenen Kurbelwellenstellung durchzuführen. Diese zusätzliche Berücksichtigung der Kennungsmarken ist nur erforderlich, wenn die Anzahl der Nockenwellenabschnitte derjenigen der Kurbelwellenabschnitte entspricht. Im übrigen dienen die einzelnen Kennungsmarken zur Synchronisation bzw. Festlegung z.B. der oberen Totpunkte der einzelnen Zylinder. Die erfindungsgemäße Einrichtung ermöglicht somit eine äußerst schnelle Erfassung des jeweils im Arbeitstakt befindlichen Zylinders und vermeidet somit längere Anlaufphasen bis zur endgültigen Festlegung des Einspritz- bzw. Zündzeitpunktes.

Bei einer besonders einfachen Ausführungsformen sind gemäß Anspruch 2 die Signalmarken und die Kennungsmarken gleichartig als Zähne und/oder Zahnlücken unterschiedlicher Breite ausgebildet. Hierdurch kann ein einziger Signalempfänger bzw. Sensor für den Kurbelwellen-Signalgeber vorgesehen werden. Bei ungleichartigen Signalmarken und Kennungsmarken müßten hierfür mehrere Signalempfänger eingesetzt werden, was jedoch aus gerätetechnischen und Kostengründen unerwünscht ist.

Vorzugsweise sind gemäß Anspruch 3 die Kennungsmarken der Kurbelwellenabschnitte an gleichsinnigen Enden derselben angeordnet. Hierdurch ist eine einfache Synchronisation für die Einspritz- bzw. Zündzeitpunkte möglich.

In weiterer Ausgestaltung haben die Kennungs- marken der Kurbelwellenabschnitte gemäß An- spruch 4 etwa die doppelte Umfangsbreite wie die Signalmarken. Dadurch ist es möglich, zur genauen Erfassung der Kurbelwellenposition eine große Anzahl von Signalmarken vorzusehen und dennoch eine genaue, sichere Identifizierung der Kurbelwellenposition bezogen auf den Arbeitszyklus zu ermöglichen.

Bei einer für einen Vierzylindermotor dienenden praktischen Ausführungsform gemäß den Ansprüchen 5 bis 7 liegen die Kennungsmarken des Kurbelwellen-Signalgebers einander diametral gegenüber. Der Nockenwellen-Signalgeber weist je nach Ausbildung der Kennungsmarken des Kurbelwellen-Signalgebers zwei oder vier Nockenwellenabschnitte mit zwei oder vier unterschiedlichen Teilungen der Signalmarken auf.

Die Erfindung wird nachfolgend an zeichnerisch dargestellten Ausführungsbeispielen für einen 4-Zylinder-Motor erläutert. Es zeigen:

Figur 1 - in einer schematischen Ansicht eine erste Ausführungsform einer Einrichtung nach der vorliegenden Erfindung,

Figur 2 - ein zu Figur 1 gehöriges Impulsdiagramm,

Figur 3 - in einer schematischen Ansicht eine zweite Ausführungsform einer Einrichtung nach der vorliegenden Erfindung,

Figur 4 - ein zu Figur 3 gehöriges Impulsdiagramm und

Figur 5 - die erfindungsgemäße Einrichtung in einer schematischen Gesamtansicht.

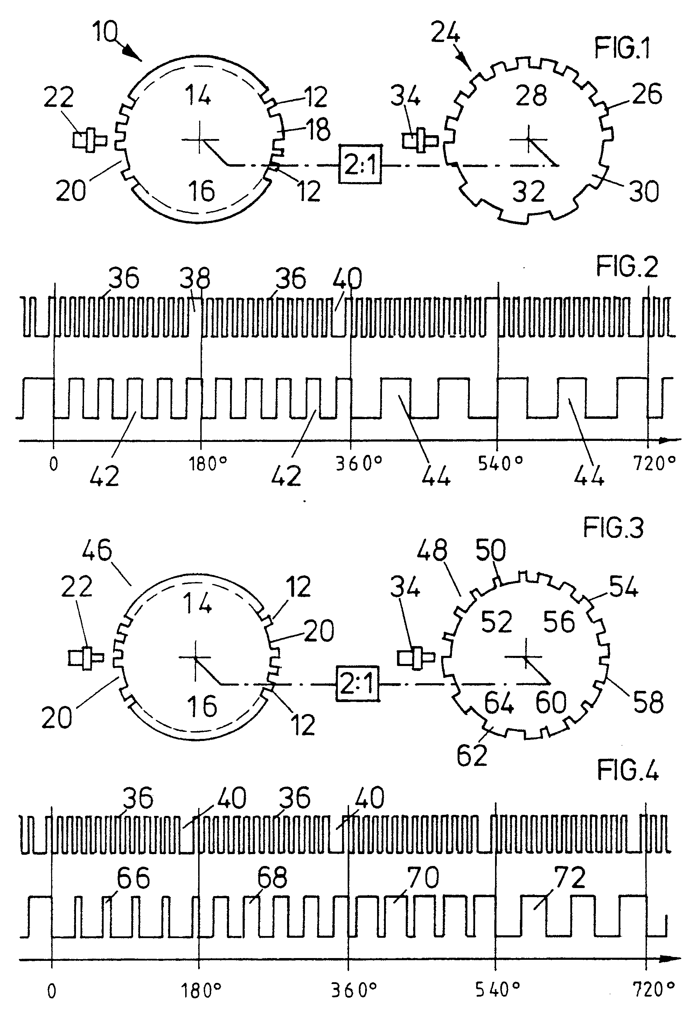

Gemäß Figur 1 ist ein Kurbelwellen-Signalgeber 10 in Form einer von einer nicht dargestellten Kurbelwelle angetriebenen Geberscheibe ausgebildet. Diese trägt an ihrem Umfang gleichmäßig verteilte Signalmarken 12 in Form von Zähnen oder Nocken. Diese Geberscheibe ist in zwei gleich große Kreisausschnitte 14 und 16 unterteilt. Jedem Kreisausschnitt ist an einem Ende desselben eine Kennungsmarke zugeordnet, die sich nahezu diametral gegenüberliegen und die im vorliegenden Fall unterschiedlich ausgebildet sind. Dem Kreisausschnitt 14 ist eine Kennungsmarke 18 in Form eines Zahns 18 zugeordnet, während dem Kreisausschnitt 16 eine Kennungsmarke 20 in Form einer entsprechenden Zahnlücke zugeordnet ist. Beide Signalmarken 18, 20 haben die gleiche Umfangsbreite und sind im vorliegenden Fall etwa doppelt so breit wie die Signalmarken 12, um eine diesbezügliche Unterscheidung vornehmen zu können. Dem Umfang des Kurbelwellen-Signalgebers 10 ist ein Signalempfänger 22 zugeordnet, der beispielsweise induktiv oder optisch arbeiten kann und beim Vorbeistreichen der Zähne bzw. Zahnlük- ken entsprechende elektrische Impulse erzeugt.

Gemäß Figur 1 ist ferner ein Nockenwellen- Signalgeber 24 ebenfalls in Form einer gezahnten Geberscheibe ausgebildet, die von der nicht dargestellten Nockenwelle angetrieben wird. Bei einem Viertaktmotor dreht sich die Kurbelwelle doppelt so schnell wie die Nockenwelle, was in Figur 1 durch eine gestrichelt dargestellte Verbindung mit ent- sprechendem Untersetzungsverhältnis für die Nok- kenwelle angedeutet ist. Die Geberscheibe des Nockenwellen-Signalgebers 24 ist wie diejenige des Kurbelwellen-Signalgebers 10 in zwei gleich große Kreisausschnitte 28 und 32 unterteilt. Über den Umfang der Geberscheibe sind Signalmarken verteilt. Die dem Kreisausschnitt 28 zugeordneten Signalmarken 26 haben eine gleichmäßige Teilung, die sich von der gleichmäßigen Teilung der dem Kreisausschnitt 32 zugeordneten Signalmarken 30 unterscheidet. Dem Umfang des Nockenwellen-Signalgebers 24 ist ebenfalls ein Signalempfänger 34 zugeordnet, der wie der Signalempfänger 22 aufgebaut sein kann.

Beim Drehen der beiden Geberscheiben erzeugen die Sensoren bzw. Signalempfänger 22, 34 bei zwei vollen Umdrehungen der Kurbelwelle, also bei insgesamt 720 Grad Kurbelwellenverdrehung und 360 Grad Nockenwellenverdrehung, die aus Figur 2 ersichtlichen Impulse. Dabei basieren die kurzen Impulse 36 des Signalempfängers 22 auf den Signalmarken 12 des Kurbelwellen-Signalgebers 10. Die Kennungsmarken 18 und 20 erzeugen am Ende einer jeden 180 Grad Drehung abwechselnd vergleichsweise längere Impulse 38 und Impulspausen 40. Demgegenüber erzeugt der Sensor bzw. Signalempfänger 34 über je 360 Grad Kurbelwellendrehung abwechselnd auf den Signalmarken 26 basierende Impulse 42 und auf den Signalmarken 30 basierende Impulse 44.

Aus Figur 2 ist klar ersichtlich, daß in den einzelnen 180 Grad Abschnitten der Kurbelwellendrehung eine eindeutige Zuordnung der Kurbelwellenstellung zu den einzelnen Arbeitszyklen der Zylinder möglich ist. Hierbei ist zunächst festzustellen, ob jeweils die Impulse 42 oder 44 vorliegen. Dieses kann in sehr einfacher Weise durch einen Impulsvergleich zwischen den Impulsen 42 bzw. 44 und den Impulsen 36 erfolgen. Beispielsweise können zwei Impulse 36 pro Impuls 42 angeben, daß es sich um die erste Kurbelwellendrehung handelt, während drei Impulse 36 pro Impuls 44 angeben, daß die zweite Kurbelwellenumdrehung vorliegt. Eine weitere Differenzierung erfolgt durch die Kennungsmarken 38 und 40. Im Falle des Vorhandenseins des Impulses 38 ist festgelegt, daß die erste oder dritte Halbdrehung der Kurbelwelle gemeint ist, während die Impulslücke 40 festlegt, daß die zweite oder vierte Halbdrehung der Kurbelwelle vorliegt.

Die Ausführungsform aus Figur 3 unterscheidet sich nur relativ geringfügig von derjenigen aus Figur 1. In diesem Fall hat ein Kurbelwellen-Signalgeber 46, der im übrigen dem Glied 10 aus Figur 1 entspricht, zwei gleiche, nahezu diametral gegenüberliegende Kennungsmarken 20, die im vorliegenden Fall als Zahnlücken ausgebildet sind. Demgegenüber ist der Nockenwellen-Signalgeber 48 im Unterschied zu Figur 1 in vier gleich große Kreisausschnitte 52, 56, 60 und 64 eingeteilt, denen jeweils Signalmarken 50, 54, 58 und 62 zugeordnet sind. Innerhalb der Kreisausschnitte sind die Teilungen der einzelnen Signalmarken gleich groß. Die Teilungen der Signalmarken unterscheiden sich jedoch von Kreisausschnitt zu Kreisausschnitt.

Das mit der Ausführungsform aus Figur 3 erzielbare Impulsdiagramm ist aus Figur 4 ersichtlich. Demnach folgt nach jeder 180 Grad Drehung der Kurbelwelle den auf den Signalmarken 12 basierenden Impulsen 36 des Signalempfängers 22 eine auf den Kennungsmarken 20 beruhende Impulslücke 40, und zwar im Unterschied zu Figur 2, bei denen sich die Impulse 38 und Impulslücken 40 abwechseln. Andererseits erzeugt der Signalempfänger 34 innerhalb der vier Halbdrehungen der Kurbelwelle bzw. einer vollen Drehung der Nockenwelle vier verschiedene Arten von Impulsen 66, 68, 70, 72 aufgrund der Signalmarken 50, 54, 58, 62 infolge des Nockenwellen-Signalgebers 48.

Auch aus Figur 4 ist ersichtlich, daß jederzeit eine zylinderbezogene Erfassung der Kurbelwellenstellung möglich ist. Dieses kann in einfacher Weise dadurch erfolgen, daß die Impulse 66, 68, 70 und 72 mit den Impulsen 36 verglichen werden. Hierbei ist es möglich, zusätzlich zu einem zahlenmäßigen Impulsvergleich auch das Impulstastverhältnis zu berücksichtigen. In jedem Falle ist es bei der Ausführungsform aus Figur 3 gemäß Figur 4 nicht erforderlich, die Impulse 40 der Kennungsmarken 20 für die Identifizierung heranzuziehen, da die Geberscheibe des Nockenwellen-Signalgebers 48 bereits in eine der Zylinderzahl entsprechende Anzahl von Kreisausschnitten mit Signalmarken unterschiedlicher Teilung unterteilt ist. Die Impulse 40 dienen lediglich zur Synchronisation.

Gemäß Figur 5 dreht sich der Kurbelwellen-Signalgeber 10 oder 46 mit doppelter Winkelgeschwindigkeit wie der Nockenwellen-Signalgeber 24 oder 48. Die Impuls-Signale der Signalempfänger 22 und 34 werden einem Impulsauswerteglied 74 zugeführt, dem im übrigen auch die Anzahl n der vorhandenen Zylinder des Motors eingegeben wird. Das Impulsauswerteglied 74 sorgt dann mit Hilfe der eingegebenen Größen für eine zylinderbezogene Bestimmung der Kurbelwellenposition, wobei das Ergebnis einer geeigneten Zünd- bzw. Einspritzeinrichtung 76 eingegeben wird, die für den notwendigen weiteren Betriebsablauf sorgt.

Die erfindungsgemäße Einrichtung ist bei großer Einfachheit ausgesprochen praktisch, da sie jederzeit eine schnelle auf den Arbeitszyklus der einzelnen Zylinder bezogene Bestimmung der Kurbelwellenposition ermöglicht. Somit kann eine exakte Motorsteuerung bzw. -regelung auch unmittelbar nach dem Motorstart erfolgen, ohne daß sich die Kurbelwelle im ungünstigsten Fall erst zweimal vollständig drehen muß. Die Einrichtung ist im Rahmen der vorliegenden Erfindung vielfältig abwandelbar. Beispielsweise können an den Geberscheiben statt Zähnen bzw. Nuten magnetische und/oder optische Marken vorgesehen sein, die mit entsprechenden Signalempfängern oder Abtastern erfaßt werden können. Eine weitere Variante bestünde darin, daß sich die Kennungsmarken nach Art und Lage von den Signalmarken unterscheiden. In diesem Falle wären zusätzliche Signalempfänger für die Kennungsmarken erforderlich. Dieser zusätzliche Aufwand wäre dann vertretbar, wenn durch eine durchgehende Belegung der Geberscheibe mit Signalmarken eine besonders große Auflösung der Drehposition in sämtlichen Drehstellungen erwünscht ist.

## Patentansprüche

1. Einrichtung zum Erfassen der auf den Arbeitszyklus einzelner Zylinder bezogenen Kurbelwellenstellung eines eine gerade Anzahl von n Zylindern aufweisenden Viertaktmotors zwecks zeitgerechter Auslösung des Zünd- bzw. Einspritzvorgangs mit jeweils einem von der Kurbelwelle und einem von der Nockenwelle drehangetriebenen Signalgeber mit Signalmarken, insbesondere mit an diesen Wellen befestigten gezahnten Geberscheiben, zum drehpositionsabhängigen Erzeugen von Impulsen mittels den Signalgebern zugeordneter stationärer Signalempfänger und mit einem an diese angeschlossenen Impulsauswerteglied für eine Zylinderzuordnung zur jeweiligen Kurbelwellenstellung, dadurch gekennzeichnet, daß der der Kurbelwelle zugeordnete, eine gleichmäßige Teilung seiner Signalmarken (12) aufweisende Kurbelwellen-Signalgeber (10; 46) umfangsmäßig in n/2 gleich große Kurbelwellenabschnitte (14, 16) unterteilt ist, daß jedem Kurbelwellenabschnitt (14, 16) eine von den Signalmarken (12) unterscheidbare Kennungsmarke (18,20) z.B für einen oberen Totpunkt der Zylinder zugeordnet ist, daß der der Nockenwelle zugeordnete Nockenwellen-Signalgeber (24; 48) umfangsmäßig in n/2 oder n gleich große, den Kurbelwellenabschnitten (14, 16) definiert zugeordnete Nockenwellenabschnitte (28, 32; 52, 56, 60, 64) unterteilt ist, deren gleichmäßige Teilungen ihrer Signalmarken (26, 30; 50, 54, 58, 62) voneinander abweichen, daß die Kennungsmarken (18, 20) der Kurbelwellenabschnitte bei gleicher Anzahl der Kurbel- sowie Nockenwellenabschnitte unterschiedlich sind sowie bei ungleicher Anzahl übereinstimmend sein können und daß das Impulsauswerteglied (74) unter Synchronisation durch die Impulse der Kennungsmarken (18, 20) eine Zylinderzuordnung zur Kurbelwellenstellung durch Impulsvergleich der augenblicklichen Impulse der Kurbel- sowie Nockenwellenabschnitte und bei gleicher Anzahl dieser Abschnitte auch unter Berücksichtigung der Unterschiedlichkeit der Impulse der jeweils zugeordneten Kennungsmarken durchführt.

2. Einrichtung nach Anspruch 1, dadurch gekennzeichnet, daß die Signalmarken (12) einerseits und die Kennungsmarken (18, 20) andererseits des Kurbelwellen-Signalgebers (10; 46) als Zähne und/oder Zahnlücken unterschiedlicher Umfangsbreite ausgebildet sind.

3. Einrichtung nach Anspruch 1 oder 2, dadurch gekennzeichnet, daß die Kennungsmarken (18, 20) der Kurbelwellenabschnitte (14, 16) an gleichsinnigen Enden derselben angeordnet sind.

4. Einrichtung nach einem der Ansprüche 1 bis 3, dadurch gekennzeichnet, daß die Kennungsmarken (18, 20) der Kurbelwellenabschnitte (14, 16) etwa die doppelte Umfangsbreite wie deren Signalmarken (12) haben.

5. Einrichtung nach einem der Ansprüche 1 bis 4 für einen Vierzylindermotor, dadurch gekennzeichnet, daß die beiden Kennungsmarken (18, 20) von insgesamt zwei gleich großen Kurbelwellenabschnitten (14, 16) einander diametral gegenüberliegen.

6. Einrichtung nach Anspruch 5, dadurch gekennzeichnet, daß die beiden Kennungsmarken (18, 20) als Zähne oder als Zahnlücken ausgebildet und insgesamt vier gleich große Nockenwellenabschnitte (52, 56, 60, 64) mit vier unterschiedlichen Teilungen ihrer Signalmarken (50, 54, 58, 62) vorhanden sind.

7. Einrichtung nach Anspruch 5, dadurch gekennzeichnet, daß die eine der beiden Kennungsmarken (18) als Zahn sowie die andere Kennungsmarke (20) als Zahnlücke ausgebildet und insgesamt zwei gleich große Nockenwellenabschnitte (28, 32) mit zwei unterschiedlichen Teilungen ihrer Signalmarken (26, 30) vorhanden sind.

Claims

1. A device for detecting the crankshaft position in relation to the working cycle of individual cylinders of a four-stroke engine comprising an even number of n cylinders for the purpose of the correctly timed triggering of the ignition and injection process, comprising two signal transmitters rotationally driven by the crankshaft and camshaft respectively and having signal marks, more particularly toothed transmitter discs secured to said shafts, for the rotary position-dependent generation of pulses by means of stationary signal receivers associated with the signal transmitters and comprising a pulse evaluation element connected to the signal receivers for a cylinder correlation with the respective crankshaft position, characterised in that the crankshaft signal transmitter (10; 46) associated with the crankshaft and comprising a uniform pitch of its signal marks (12) is divided over its circumference in $n/2$ equally sized crankshaft segments (14, 16), associated with each crankshaft segment (14, 16) is a recognition mark (18, 20), which is distinguishable from the signal marks (12) and is provided, for example, to mark a top dead centre of the cylinder, the camshaft-signal transmitter (24; 48) associated with the camshaft is divided over its circumference into $n/2$ or n equally sized camshaft segments (28, 32; 52, 56, 60, 64), which are associated in a defined manner with the crankshaft segments (14, 16) and whose uniform pitches of the signal marks (26, 30; 50, 54, 58, 62) differ from one another, the recognition marks (18, 20) of the crankshaft segments differ in the case of a like number of crank and camshaft segments and in the case of a different number can correspond and with a synchronisation by the pulses of the recognition marks (18, 20), the pulse evaluation element (74) carries out a cylinder correlation with the crankshaft position by a pulse comparison of the momentary pulses of the crankshaft and camshaft segments and in the case of a like number of said segments also taking into account the difference between the pulses of the respective associated recognition marks.

2. A device according to claim 1, characterised in that the signal marks (12) on the one hand and the recognition marks (18, 20) on the other hand of the crankshaft signal transmitter (10; 46) are designed as teeth and/or tooth gaps having different circumferential widths.

3. A device according to claim 1 or 2, characterised in that the recognition marks (18, 20) of the crankshaft segments (14, 16) are arranged at the ends of said segments in the same direction of rotation.

4. A device according to one of claims 1 to 3, characterised in that the recognition marks (18, 20) of the crankshaft segments (14, 16) have approximately twice the circumferential width as the signal marks (12).

5. A device according to one of claims 1 to 4 for a four-stroke cylinder engine, characterised in that the two recognition marks (18, 20) of a total of two equally sized crankshaft segments (14, 16) are arranged diametrally opposite one another.

6. A device according to claim 5, characterised in that the two recognition marks (18, 20) are designed as teeth or tooth gaps and a total of four equally sized camshaft segments (52, 56, 60, 64) are provided with four different pitches of their signal marks (50, 54, 58, 62).

7. A device according to claim 5, characterised in that one of the two recognition marks (18) is designed as a tooth and the other (20) as a tooth gap and a total of two equally sized camshaft segments (28, 32) are provided with two different pitches of their signal marks (26, 30).

**Revendications**

1. Dispositif pour détecter la position du vilebrequin, rapportée au cycle de travail des différents cylindres, d'un moteur à quatre temps présentant un nombre pair n de cylindres afin de déclencher à l'instant correct le processus d'allumage et/ou d'injection, le dispositif comprenant deux émetteurs de signaux munis de repères-signaux et entraînés en rotation respectivement par le vilebrequin et par l'arbre à cames, en particulier des disques émetteurs dentés fixés à ces arbres, pour générer, en fonction de la position de rotation, des impulsions au moyen de récepteurs de signaux fixes associés aux émetteurs de signaux, et un organe de traitement d'impulsions connecté aux récepteurs de signaux pour associer un cylindre à la position de vilebrequin concernée, caractérisé en ce que l'émetteur de signaux de vilebrequin (10 ; 46) présentant un pas uniforme de ses repères-signaux (12) est divisé périphériquement en n/2 segments de vilebrequin (14, 16) de même taille, en ce qu'à chaque segment de vilebrequin (14, 16) est associée une marque distinctive (18, 20), susceptible d'être distinguée des repères-signaux (12), par exemple pour un point mort supérieur des cylindres, en ce que l'émetteur de signaux (24 ; 48) associé à l'arbre à cames est divisé périphériquement en n/2 ou n segments ou secteurs d'arbre à cames (28, 32 ; 52, 56, 60, 64) de même taille associés de façon bien définie aux segments de vilebrequin (14, 16), les pas uniformes des repères-signaux (26, 30 ; 50, 54, 58, 62) desdits segments ou secteurs d'arbre à cames étant différents les uns des autres, en ce que les marques distinctives (18, 20) des segments de vilebrequin sont différentes pour un nombre égal de segments ou secteurs du vilebrequin et de l'arbre à cames mais peuvent, pour un nombre inégal de ces segments ou secteurs, être concordantes et en ce que l'organe de traitement d'impulsions (74) effectue, dans des conditions de synchronisation par les impulsions des marques distinctives (18, 20), une association de cylindre à la position de vilebrequin par comparaison des impulsions instantanées des segments ou secteurs de vilebrequin et d'arbre à cames et, dans le cas d'un nombre égal de ces segments ou secteurs, effectue cette association en tenant également compte de la diversité des impulsions des marques distinctives qui leur sont respectivement associées.

2. Dispositif selon la revendication 1, caractérisé en ce que les repères-signaux (12), d'une part, et les marques distinctives (18, 20), d'autre part, de l'émetteur de signaux de vilebrequin (10 ; 46) sont réalisés sous la forme de dents et/ou d'entre-dents de largeurs périphériques différentes.

3. Dispositif selon la revendication 1 ou 2, caractérisé en ce que les marques distinctives (18, 20) des segments de vilebrequin (14, 16) sont disposées à des extrémités de même sens de ces derniers.

4. Dispositif selon l'une quelconque des revendications précédentes, caractérisé en ce que les marques distinctives (18, 20) des segments de vilebrequin (14, 16) présentent une largeur périphérique sensiblement double de celle des repères-signaux (12) de ces derniers.

5. Dispositif selon l'une quelconque des revendications précédentes pour un moteur à quatre cylindres, caractérisé en ce que les deux marques distinctives (18, 20) d'au total deux segments de vilebrequin (14, 16) de même taille sont diamétralement opposées.

6. Dispositif selon la revendication 5, caractérisé en ce que les deux marques distinctives (18, 20) sont réalisées sous la forme de dents ou d'entre-dents et en ce qu'il est prévu au total quatre secteurs d'arbre à cames (52, 56, 60, 64) de même taille avec quatre pas différents de leurs repères-signaux (50, 54, 58, 62).

7. Dispositif selon la revendication 5, caractérisé en ce que l'une (18) des deux marques distinctives est réalisée sous la forme d'une dent et l'autre marque distinctive (20) sous la forme d'un entre-dent et en ce qu'il est prévu au total deux segments d'arbre à cames (28, 32) de même taille avec deux pas différents de leurs repères-signaux (26, 30).

FIG.1

FIG.2

FIG.3

FIG.4

FIG.5